# EUROPEAN PATENT SPECIFICATION

(11) **EP 1 615 435 B1**
(45) Date of publication and mention of the grant of the patent: **25.02.2009**
(21) Application number: 05105411.2
(22) Date of filing: 20.06.2005
(51) Int. Cl.: H04N 7/10, H04N 11/00, H04N 5/40, H04N 5/455, H04N 5/232

(54) **Transmitter, receiver and system for Triax cable video transmission with HDTV option**
Sender, Empfänger und System für Triax-Kabel Videoübertragung mit HDTV-Option
Emetteur, récepteur et système de transmission vidéo par cable Triax avec option HDTV

(30) Priority: 05.07.2004 EP 04300426
(43) Date of publication of application: 11.01.2006
(73) Proprietor: Thomson Licensing, 92100 Boulogne-Billancourt (FR)
(72) Inventor: Koppe, Rudolf, 4817 NB, Breda (NL)
(74) Representative: Lindemann, Robert

(56) References cited:
- EP-A- 0 349 169
- EP-A- 0 809 397
- DE-A- 3 311 633
- GB-A- 859 364
- US-A- 4 535 352
- US-A- 5 598 225
- US-A- 5 640 205
- US-A- 6 124 899
- PATENT ABSTRACTS OF JAPAN vol. 1997, no. 06, 30 June 1997 (1997-06-30) & JP 09 037134 A (SONY CORP), 7 February 1997 (1997-02-07)
- U. REIMERS (EDITOR): "Digitale Fernsehtechnik - Datenkompression und Übertragung für DVB" 1995, SPRINGER (BERLIN, HEIDELBERG, NEW YORK) , BERLIN, HEIDELBERG, NEW YORK, ASF. , XP002308480 * page 212 - page 213 *

## Description

The present invention relates to interfaces for transmitting and receiving a HF modulated video signal of high bandwidth, in particular for a video camera and a base station with which the video camera communicates.

Professional high definition television (HDTV) broadcast cameras for studio and electronic field productions today use either an optical fibre or a special coaxial cable, referred to as a triax cable, for communicating with a base station where image data from one or more cameras are collected and processed. Optical fibres allow very high data rates between the camera and the base station, so that many experts expect that in the long run optical fibre technology will become standard for connecting cameras and base stations. At present, however, fibre technology has some difficulties in penetrating the market, because in many facilities where professional video cameras are used, for example in sport stadiums, triax cables are installed, whereas optical fibres are not. Accordingly, a producer who uses triax transmission technology, for recording an event, can bring his cameras to a given location, install his base station, and can interconnect cameras and base stations using triax cables that are present on the location. A producer who uses optical fibre technology cannot rely on such fibres being present, so that for recording the same event, he must not only install his cameras and base station but must also do the wiring. This does not only increase the cost of setting up his equipment, it also decreases its reliability. In addition, current technology of fibre optic connectors are more sensitive to contaminations by dust and humidity compared to triax connectors. Therefore, triax technology will probably be continued to be used for quite a long time in the future.

In a triax cable, information is transferred from the camera to the base station and vice versa using a plurality of carriers at different frequencies. Some of these have components of the camera's video signal modulated onto them in order to transfer the video signal to the base station, other carriers are modulated in the base station in order to transfer control information from there to the camera. All these carriers suffer an attenuation in the cable that imposes an upper limit for the length the triax cable can have. For standard definition cameras, this upper limit is at approx. 3 km; for HDTV cameras, in which the bandwidth of the video signal is higher, the usable maximum length of the triax cable reduces to about 1500 m.

In a number of applications, especially when recording a sports event, it is interesting to generate more pictures per second than under normal operating conditions. The extra pictures generated are used to play back certain actions in slow motion while maintaining sharpness in moving objects. This is a common feature in standard definition TV camera systems. It would be desirable to provide the same feature in HDTV cameras, too, but the problem arises that if the extra pictures also have to be transmitted via the existing triax cables, more bandwidth is needed. I.e. whereas at present a HDTV video signal occupies a frequency range between approx. 25 and 130 MHz, the spectrum of a HDTV Signal with an increased image rate will have to extend to still higher frequencies. However, since attenuation increases with frequency, this causes the maximum useable length of the cable to decrease still further. If the maximum useable length becomes less than the length of the installed cable, it is quite evident that the system will become inoperable.

US-A-4 535 352 discloses transmitting a semicompatible HDTV signal over a standard TV channel while using QAM modulation for a field-differential luminance component.

EP-A-0 349 169 discloses using QAM for transmission of color or luminance components of video.

The object of the present invention is to provide triax interfaces for a video camera and a base station, which can transmit and receive, respectively, video signals of a very high image rate without suffering from the maximum useable cable length limitations set out above.

For a triax transmitter interface, the object of the invention is achieved, as defined in claim 1, by providing, as a first modulator for modulating a luminance component of a video signal received at an input port of the interface e.g. from a camera head, a quadrature modulator which is adapted to modulate luminance components of two video image lines simultaneously and in quadrature onto said first carrier. The quadrature modulator practically doubles the rate at which the luminance information can be transmitted via the triax cable without increasing the frequency range occupied by said luminance information. Therefore, if an existing triax cable is found to be useable for transmitting a conventional HDTV signal, it can be expected that the same cable will be able to accommodate the luminance component of a video signal in which the frame rate is twice that of a normal HDTV signal, if the interface of the invention is used.

Of course, the use of quadrature modulation makes the luminance signal susceptible to crosstalk between in-phase and quadrature components, but even if such crosstalk cannot be totally avoided, its effect can be expected to be small if the information contained in the two image lines modulated simultaneously onto the first carrier is similar because these two lines are spatially adjacent lines in a same image.

Since in either case, said two image lines will be received at different times at the input port of the transmitter interface, the first modulator has a memory associated to it for separately buffering these two image lines.

In order to facilitate synchronisation of a receiver interface to the I and Q components of the modulated first carrier, the transmitter interface should preferably comprise means for transmitting phase synchronization signals for these two components.

These synchronisation signals may preferably be transmitted in a vertical blanking period of the video signal, e.g. in the form of a white line.

In order to facilitate compensation of group delay differences in the frequency band of the luminance information, a high frequency component should be contained in at least one of the synchronization signals.

Such a high frequency component having a fixed phase relationship to the first carrier may conveniently be obtained using a frequency divider for deriving the high frequency component from the first carrier itself.

The transmitter interface comprises a second modulator for modulating a chrominance component of the video signal onto a second carrier. It is known in the art that this second modulator can be a quadrature modulator. The frequency interval around the second carrier, which is allocated for transmitting the chrominance component, is therefore used very efficiently already, and it is not possible to squeeze more information into this frequency interval by changing the type of modulation. Therefore, the invention provides signal processing means connected between the video signal input port of the transmitter interface and its second modulator, which processing means are adapted to receive, in a given time unit, two lines of the chrominance component and to derive therefrom a single line to be supplied to the second modulator.

This single line may be obtained e.g. by simple decimation, i.e. by discarding one out of every two lines of the chrominance component received, or by averaging between pairs of pixels at a same horizontal location in the two lines or by applying any convenient interpolation scheme. In every case, the effect of the processing means is to reduce the resolution of the chrominance component in the vertical direction by a factor of two.

The object of the invention is further achieved by a triax receiver interface as defined in claim 9, comprising, as a first demodulator, a quadrature demodulator adapted to demodulate luminance components of two video image lines simultaneously and in quadrature from the first carrier of a high frequency video signal received at the triax input port of the receiver interface. Just like the transmitter interface, the receiver interface preferably has a memory associated to its first demodulator for buffering at least one of the two simultaneously demodulated image lines, and phase synchronisation signal detecting means for detecting the phase synchronization signals of the I and Q components of the modulated first carrier. In order to compensate frequency dependent attenuation of the triax cable, the receiver interface should have an amplifier with a frequency dependent gain connected between its triax input port and said first demodulator.

As a criterium for adjusting a gain correction factor of said amplifier stage, the amount of crosstalk between a high frequency component of a synchronisation signal of one of said I and Q components and the other of said I and Q components obtained by the first demodulator may be used.

The invention further relates to a triax transmission system comprising transmitter and receiver interfaces as defined above and a triax cable connecting these interfaces. In such a system, an all-pass filter having a group delay characteristic opposite to that of the triax cable may be provided, preferably in distributed form along the triax cable or lumped at the transmitter or receiver interface.

Further objects and advantages of the invention become apparent from the subsequent description of preferred embodiments, referring to the appended drawings, in which:
- Fig. 1: is a simplified block diagram of a transmission system comprising triax interfaces according to the invention and a cable connecting them;
- Fig. 2: is a schematic representation of the spectrum of an HDTV signal on a triax cable;
- Fig. 3: illustrates a first embodiment of a bandwidth reducing circuit for the chrominance component of the HDTV signal; and
- Fig. 4: illustrates a second embodiment of a bandwidth reducing circuit.

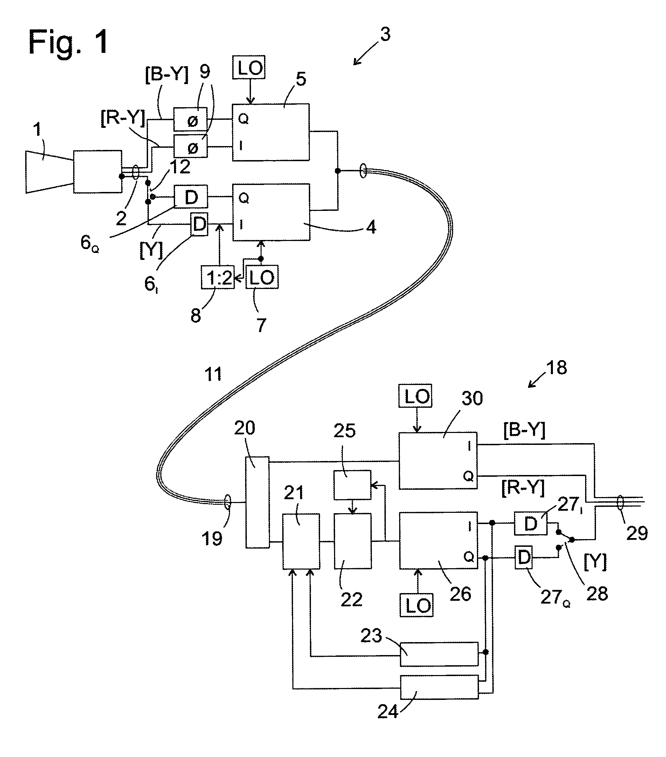

In Fig. 1, reference numeral 1 is a high definition video camera head which outputs a baseband video signal comprising a luminance component [Y] and two chrominance components [R-Y], [B-Y] on three lines. The camera head has a normal operating mode in which it outputs images at a rate of about 30/s, and a fast operating mode in which the image rate per second is twice that of the normal mode.

The three lines from camera head 1 are connected to a baseband input port 2 of a triax transmitter interface, generally referred by 3. In the interface 3, the luminance component [Y] reaches a switch 12 where it is distributed to one of two buffers, 6_{I}, 6_{Q} according to the position of switch 12. The output ports of buffers 6_{I}, 6_{Q} are connected to in-phase and quadrature input ports I, Q of a first quadrature modulator 4. A first local oscillator 7 provides a carrier signal at 56 MHz to modulator 4. The same carrier signal is supplied to a frequency divider 8.

The second modulator 5 has its in-phase and quadrature inputs I, Q connected to the [R-Y], [B-Y] lines of input port 2 via bandwidth reducing circuits 9.

When the camera head 1 is in its normal mode, the bandwidth reducing circuits 9 are idle, and the chrominance signals [R-Y], [B-Y] go through them without being modified. The switch 12 transmits the luminance component [Y] to buffer 6_{I} only, which forwards it without delay to the in-phase input I of modulator 4. Buffer 6 thus receives no data and provides a constant output of zero, so that the output of modulator 4 is determined by its in-phase input alone. By superimposing the output signals from the two modulators 4, 5 at a triax output port 10 of interface 3, a conventional HF-modulated video signal suitable for transfer on triax cable 11 is obtained.

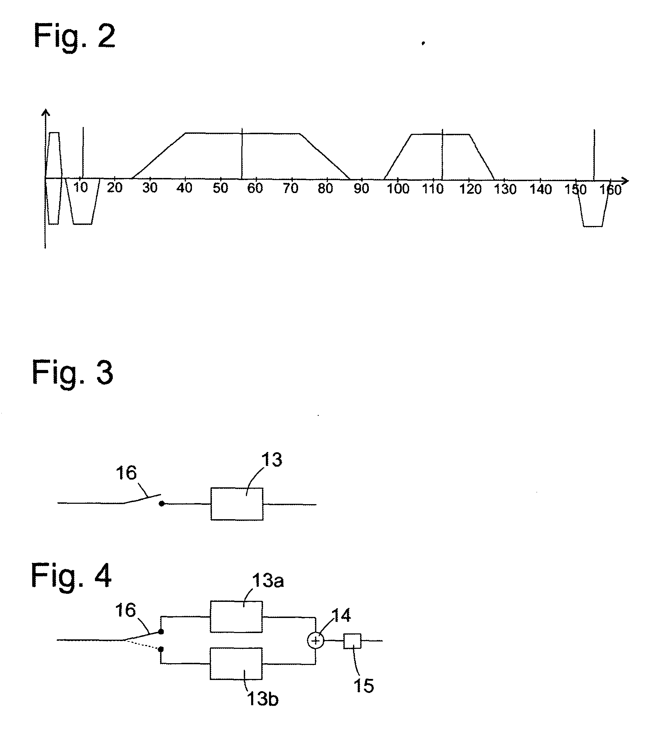

Fig. 2 illustrates the spectrum of such a HF-modulated signal, comprising luminance and chrominance bands centred around 56 and 112 MHz, respectively, and other bands for transmitting information to and from the camera, which will not be discussed here.

When the camera head 1 operates in the fast mode, the line period of the video signal received at input port 2 of the interface 3, referred to subsequently as the fast camera line period, is half the normal camera line period, i.e. two image lines are received in a time interval in which just one line is received in the normal mode.

In the fast mode, switch 12 is toggled on a line-by-line basis. I.e. an odd-numbered image line from camera head 1 has its luminance component buffered in delay buffer 6_{Q}; it is not received at in-phase input I of modulator 4. When a subsequent even-numbered image line is output from camera head 1, its data are buffered in buffer 6_{I} of modulator 4, and, simultaneously, data are read from buffers 6_{I}, 6_{Q} and input into the first modulator 4. The rate at which data are read from a buffer 6, or 6_{Q} is half the rate at which they are written, i.e. the modulator 4 operates with a modulator line period which is identical to the normal camera line period or twice the fast camera line period. When the even-numbered line has been received completely by the interface 3, only the first half of the two lines have been input into modulator 4. The second halves of these lines are input into the modulator 4 during the following fast camera line period, while a subsequent odd-numbered line is being written into buffer 6_{Q}.

According to a simple embodiment shown in Fig. 3, the bandwidth reducing circuits 9 are each formed of a switch 16 and a buffer 13, which receives chrominance data from input port 2 whenever switch 16 is closed. The switch 16 is toggled between open and closed positions at each transition from one image line to the next in the input video signal, so that the buffer 13 receives chrominance data of odd-numbered lines or of even-numbered lines only, and every other line is discarded. The rate at which data are transferred from buffer 13 to second modulator 5 is the same in normal and fast modes. The second quadrature modulator 5 may therefore be of the type which is conventionally used for transmitting an HDTV chrominance signal over a triax line and need therefore not be described in detail here.

According to an advanced embodiment shown in Fig. 4, each bandwidth reducing circuit 9 has two buffers 13a, 13b, one of which is connected at a time to input port 2 by switch 16. The buffers 13a, 13b are read in synchronism, so that data corresponding to identical horizontal positions in adjacent image lines are read simultaneously from the buffers 13a, 13b and are added in an adder circuit 14 connected to the outputs of buffers 13a, 13b. Between the output of adder 14 and an input of modulator 5, there is a dividing circuit for dividing the output of the adder 14 by two, the output of which corresponds to the average of the data output from buffers 13a, 13b.

If desired, the bandwidth reducing circuits can have more than two buffers, for storing an arbitrary number of the most recent image lines, and the adder 14 and divider 15 are replaced by a more sophisticated arithmetic circuit that calculates chrominance data to be applied to the modulator 5 by any convenient pre-defined law based on data that are simultaneously read from the various buffers.

As can be seen in Fig. 2, the quadrature-modulated chrominance signal from modulator 5 has a bandwidth of approx. 30 MHz around its carrier frequency of 112 MHz, whereas the luminance component centred around 56 MHz is about 60 MHz wide. This is due to the fact that the horizontal resolution of the chrominance component is only half of that of the luminance component, i.e. the number of chrominance data supplied per image line by the camera head 1 is only half the number of luminance data.

In order to enable a receiver to distinguish between the I and Q components of the output of modulator 4, the receiver must be provided with information from which the phase of the two components at the receiver can be derived. Since the line number of the video signal provided by camera head 1 is conventionally higher than the number of lines that can actually be displayed on a screen, the non-displayed lines are available for transmitting control information of various types. In each frame of the video signal, these non-displayed lines form a consecutive block referred to as a vertical blanking period.

In each blanking period, two so-called white lines are generated, i.e. the luminance signal [Y] is held at a constant level corresponding to a maximum brightness during one fast camera line period of the vertical blanking period. It will be assumed here that the white lines are generated by camera head 1, although circuitry for generating them and inserting them in the luminance component [Y] might also be provided in interface 3 itself, instead. One of these white lines is even-numbered and is therefore applied to the I input of modulator 4 by switch 12, the other, being odd-numbered, is applied to the Q input. At the output of modulator 4, these two white lines yield two wave trains at a phase difference of 90 degrees. While the even-numbered white line is applied to the in-phase input I of modulator 4, a signal from frequency divider 8 at 26 MHz is superimposed on it. I.e., after modulation in modulator 4 the spectrum of this wave train has components at 28, 56 and 84 MHz, whereas the spectrum of the other only has one component at 56 MHz.

When the HF video signal output from transmitter interface 3 propagates along triax cable 11, it undergoes frequency dependent attenuation and phase shifts. I.e. when it reaches a triax receiver interface 18 at the other end of cable 11, amplitudes may be different for upper and lower sidebands of a same carrier, and a phase shift may exist between the two sidebands.

Before explaining how this problem is solved, the structure of the triax receiver interface will be discussed briefly referring to Fig. 1. At the triax input port 19 of the receiver interface 18, a frequency-separating filter 20 is provided for separating luminance and chrominance bands of the HF video signal. The luminance output of frequency separating filter 20 is connected to an amplifier 21, the gain g of which is essentially a linear function g=af+b of frequency f, the factors a, b of which are controlled by circuits 23, 24 so that upper and lower sidebands of the luminance component have a same, predefined power level.

The output of amplifier 21 is connected to an input of an all-pass filter 22 that applies to the luminance component a frequency dependent phase shift under control of a control circuit 25. The control circuit 25 detects from the output of all-pass filter 22 the upper and lower sidebands at 28 and 84 MHz, respectively, of the even-numbered white line on which the 28 MHz signal from frequency divider 8 is superimposed in the transmitter interface 3. At the transmitter interface 3, the phase difference between the two sidebands is defined by the phase relationship between the signals from local oscillator 7 and frequency divider 8. Since the output of frequency divider is directly derived from that of local oscillator 7, there is a known, strictly constant phase difference between the two sidebands. In the receiver interface 18, the control circuit 25 determines how much the phase difference between the two sidebands at the output side of all-pass filter 22 differs from the known phase difference the sidebands had at the transmitter interface 3, and controls the frequency dependent phase shift characteristic of all-pass filter 22 so that the expected phase difference is restored.

It should be noted that the all-pass filter 22 might just as well be placed at other locations of the transmission system, e.g. between frequency separating filter 20 and amplifier 21 or even in front of filter 20, where it might also affect the phase delay of the chrominance component. In principle, it might even be placed in the transmitter interface 3 or somewhere along the cable 11 and be remotely controlled by control circuit 25 using a control signal that is propagated in the triax cable 11 from the receiver interface 18 towards the transmitter interface 3 in a control band, e.g. the one shown in Fig. 2 to be centred on a carrier frequency between 1 and 5 MHz.

The output signal from all-pass filter 22 is demodulated in a first quadrature demodulator 26. The demodulator 26 is adapted to detect the two white lines in each vertical blanking period, to determine from these the phases of in-phase and quadrature components and to set accordingly the phases of two local oscillator signals with which the output signal from all-pass filter 22 is multiplied in demodulator 26 in order to restore the I and Q components of the luminance signal in the baseband. The power levels of the demodulated white lines are received by the circuits 23, 24 mentioned above. One circuit 23 detects a difference between the two power levels and adjusts the coefficient a of the gain function of amplifier 21 so that the difference is decreased and finally made zero. The other circuit 24 compares the power level of one of the two white lines to a desired value and increases or decreases the coefficient b so that the power level is finally set to the desired value. In this way, after a certain convergence time for adapting the all-pass filter 22 and the amplifier 21 to the attenuation characteristics of the cable 11, the I and Q components of the luminance signal are restored at the outputs of demodulator 26 identical to the input signals of modulator 4. As a result, gain of amplifier 21 is adjusted and the crosstalk between the I and Q components is reduced, in the optimum case reduced to zero.

The restored line signals appearing simultaneously at outputs I, Q of demodulator 26 are written into buffers 27_{I}, 27_{Q}. The operation of buffers 27_{I}, 27_{Q} is opposite to that of buffers 6_{I}, 6_{Q} of the transmitter interface 3. When data of an odd-numbered line have been collected in buffer 27_{Q}, outputting these data at baseband output port 29 begins via switch 28 at twice the rate at which the data are written into the buffer 27_{Q}, so that when the demodulator 26 has finished outputting this line, buffer 27_{Q} is empty. At that time, data of a complete even-numbered image line have been collected in buffer 27_{I}, and this line is output to port 29 while a subsequent pair of lines is demodulated in demodulator 26.

The circuitry for demodulating the chrominance component in receiver interface 18 is essentially identical with that of a conventional HDTV receiver interface, so that it need not be described in detail here, and is represented in the Figure only very schematically by a second demodulator 30 that receives the chrominance component from frequency separating filter 20 and restores therefrom baseband chrominance signals [B-Y], [R-Y]. The only difference is that in the fast operating mode each line of chrominance data is output twice consecutively from the demodulator 30, so that a restored image that is output at output port 29 is formed of pairs of lines in which the chrominance data are identical. I.e. the vertical chrominance resolution of an image at port 29 in the fast operating mode is only half of the vertical chrominance resolution and the vertical luminance resolution in the normal mode. However, this loss of resolution is hardly noticeable, because in a conventional TV image, chrominance resolution in the horizontal direction is only half of the luminance resolution, so that according to the invention, chrominance resolutions in the horizontal and vertical directions are simply made equal in the fast operating mode. Luminance resolution, on the other hand, is not affected when switching from normal to fast operating mode, because the data rate in the luminance band of the signal on triax cable 11 is doubled by using quadrature modulation.

## Claims

1. A triax transmitter interface (3) for transmitting a video signal on one triax cable (11), comprising a video signal input port (2), a first modulator (4) for modulating a luminance component ([Y]) of a video signal received at said input port (2) onto a first carrier and a second modulator (5) for modulating a chrominance component ([B-Y], [R-Y]) of the video signal onto a second carrier, wherein the luminance and chrominance bands of the modulated components are centred at different frequencies, and one triax output port (10) for outputting said modulated carriers to the triax cable (11), **characterized in that in that** said first modulator (4) is a quadrature modulator (4), **in that** two buffers (6_{I}, 6_{Q}) are arranged between the input port (2) and the first modulator (4) for buffering respectively and alternatingly the luminance component ([Y]) of spatially adjacent lines of a same video image, where a switch (12) for the alternation is arranged between the input port (2) and the buffers (6_{I}, 6_{Q}) , **in that** an output port of one of the buffers (6_{I}) is connected to an inphase input and an output port of the other of the buffers (6_{Q}) to a quadrature input of the first modulator (4) and **in that** the first modulator (4) is adapted for modulating the buffered luminance components of said spatially adjacent video image lines simultaneously and in quadrature onto said first carrier.

2. The triax transmitter interface according to claim 1, wherein the data are read from the buffer (6_{I}, 6_{Q}) at half the rate at which they are written into said buffers (6_{I}, 6_{Q}).

3. The triax transmitter interface according to claim 1 or 2, comprising means for transmitting phase synchronisation signals for inphase I and quadrature Q components of said modulated first carrier.

4. The triax transmitter interface according to claim 3, wherein said phase synchronisation signal transmitting means is adapted to transmit I component and Q component synchronisation signals in a vertical blanking period of the video signal.

5. The triax transmitter interface according to claim 3 or 4, wherein said synchronization signal is a white line.

6. The triax transmitter interface according to one of claims 3 to 5, wherein said synchronization signal has a high frequency component.

7. The triax transmitter interface according to claim 6, comprising a frequency divider (8) for deriving the high frequency component from the first carrier.

8. The triax transmitter interface according to one of the preceding claims, wherein signal processing means (9) are connected between said video signal input port (2) and said second modulator (5), which processing means are adapted to receive, in a given time unit, two lines of the chrominance component ([B-Y], [R-Y]) and to derive therefrom a single line to be supplied to the second modulator (5).

9. A triax receiver interface (18) for co-operating with the transmitter interface (3) according to one of the preceding claims, comprising a triax input port(19) for connecting to one triax cable (11), a first demodulator (26) for demodulating a luminance component of a video signal from a first carrier received at said input port (19) and a second demodulator (30) for demodulating a chrominance component of the video signal from a second carrier received at said input port (19), wherein the luminance and chrominance bands of said video signal are centred at different frequencies, **characterized in that** said first demodulator (26) is a quadrature demodulator, **in that** two buffers (27_{I}, 27_{Q}) are respectively arranged between inphase I and quadrature Q outputs of the first demodulator (26) and an output port (29) for buffering in-phase I and quadrature Q components of the demodulated luminance component, **in that** a switch (28) is arranged between the buffers (27_{I}, 27_{Q}) and the output port (29) for outputting the in-phase or quadrature components one after another and **in that** the first demodulator (26) is adapted to demodulate the luminance components of two spatially adjacent video image lines simultaneously and in quadrature from said first carrier.

10. The triax receiver interface according to claim 9, wherein the data are read from the buffers (27I, 27Q) at twice the rate at which the data are written into the buffers (27I, 27Q).

11. The triax receiver interface according to one of claims 9 to 10, comprising circuits (23, 24, 25) for detecting phase synchronisation signals for I and Q components of said modulated first carrier in a signal received at said triax input port (19).

12. The triax receiver interface according to one of claims 9 to 11, wherein an amplifier (21) having a frequency dependent gain is connected between said triax input port (19) and said first demodulator (26).

13. The triax receiver interface according to claims 11 and 12, wherein a gain correction factor of said amplifier (21) is controlled so as to minimize crosstalk between a high frequency component of a synchronisation signal of one of said I and Q components and the other of said I and Q components obtained by the first demodulator (26).

14. A triax transmission system comprising a transmitter interface (3) according to one of claims 1 to 8 and a receiver interface (18) according to one of claims 9 to 13, connected by a trial cable (11).

15. The transmission system of claim 14, further comprising at least one all-pass filter (22) applying a frequency dependent phase shift to the luminance component.

## Patentansprüche

1. Triax-Senderschnittstelle (3) zum Senden eines Videosignals auf einem Triax-Kabel (11), wobei die Triax-Senderschnittstelle umfasst: einen Videosignal-Eingangsanschluss (2), einen ersten Modulator (4) zum Modulieren einer Helligkeitskomponente ([Y]) eines bei dem Eingangsanschluss (2) empfangenen Videosignals auf einen ersten Träger und einen zweiten Modulator (5) zum Modulieren einer Farbwertkomponente ([B-Y], [R-Y]) des Videosignals auf einen zweiten Träger, wobei das Helligkeits- und das Farbwertband der modulierten Komponenten bei unterschiedlichen Frequenzen zentriert sind, und einen Triax-Ausgangsanschluss (10) zum Ausgeben der modulierten Träger an das Triax-Kabel (11), **dadurch gekennzeichnet, dass** der erste Modulator (4) ein Quadraturmodulator (4) ist, dass zwischen dem Eingangsanschluss (2) und dem ersten Modulator (4) zwei Puffer (6_{I}, 6_{Q}) angeordnet sind, um jeweils und abwechselnd die Helligkeitskomponente ([Y]) der räumlich angrenzenden Zeilen eines selben Videobilds zu puffern, wobei zwischen dem Eingangsanschluss (2) und den Puffern (6_{I}, 6_{Q}) ein Schalter (12) für den Wechsel angeordnet ist, dass ein Ausgangsanschluss eines der Puffer (6_{I}) mit einem Inphase-Eingang verbunden ist und ein Ausgangsanschluss des anderen der Puffer (6_{Q}) mit einem Quadratureingang des ersten Modulators (4) verbunden ist und dass der erste Modulator (4) so ausgelegt ist, dass er die gepufferten Helligkeitskomponenten der räumlich angrenzenden Videobildzeilen gleichzeitig und in Quadratur auf den ersten Träger moduliert.

2. Triax-Senderschnittstelle nach Anspruch 1, bei der die Daten mit der halben Rate aus den Puffern (6_{I}, 6_{Q}) gelesen werden, mit der sie in die Puffer (6_{I}, 6_{Q}) geschrieben werden.

3. Triax-Senderschnittstelle nach Anspruch 1 oder 2, mit Mitteln zum Senden von Phasensynchronisationssignalen für die Inphase-I- und die Quadratur-Q-Komponente des modulierten ersten Trägers.

4. Triax-Senderschnittstelle nach Anspruch 3, bei der das Phasensynchronisationssignal-Sendemittel so ausgelegt ist, dass es 1-Komponenten- und Q-Komponenten-Synchronisationssignale in einer vertikalen Austastungsperiode des Videosignals sendet.

5. Triax-Senderschnittstelle nach Anspruch 3 oder 4, bei der das Synchronisationssignal eine Weißzeile ist.

6. Triax-Senderschnittstelle nach einem der Ansprüche 3 bis 5, bei der das Synchronisationssignal eine Hochfrequenzkomponente besitzt.

7. Triax-Senderschnittstelle nach Anspruch 6, mit einem Frequenzteiler (8) zum Ableiten der Hochfrequenzkomponente aus dem ersten Träger.

8. Triax-Senderschnittstelle nach einem der vorstehenden Ansprüche, wobei Signalverarbeitungsmittel (9) zwischen den Videosignal-Eingangsanschluss (2) und den zweiten Modulator (5) geschaltet sind, wobei die Verarbeitungsmittel so ausgelegt sind, dass sie in einer gegebenen Zeiteinheit zwei Zeilen der Farbwertkomponente ([B-Y], [R-Y]) empfangen und daraus eine einzelne Zeile ableiten, die dem zweiten Modulator (5) zugeführt werden soll.

9. Triax-Empfängerschnittstelle (18) für das Zusammenwirken mit der Senderschnittstelle (3) gemäß einem der vorstehenden Ansprüche, wobei die Triax-Empfängerschnittstelle umfasst: einen Triax-Eingangsanschluss (19) zum Verbinden mit einem Triax-Kabel (11), einen ersten Demodulator (26) zum Demodulieren einer Helligkeitskomponente eines Videosignals aus einem an dem Eingangsanschluss (19) empfangenen ersten Träger und einen zweiten Demodulator (30) zum Demodulieren einer Farbwertkomponente des Videosignals aus einem an dem Eingangsanschluss (19) empfangenen zweiten Träger, wobei das Helligkeits- und das Farbwertband des Videosignals bei unterschiedlichen Frequenzen zentriert sind, **dadurch gekennzeichnet, dass** der erste Demodulator (26) ein Quadraturdemodulator ist, dass zwischen dem Inphase-I-Ausgang und dem Quadratur-Q-Ausgang des ersten Demodulators (26) und einem Ausgangsanschluss (29) zwei Puffer (27_{I}, 27_{Q}) angeordnet sind, um die Inphase-I- und die Quadratur-Q-Komponente der demodulierten Helligkeitskomponente zu puffern, dass zwischen den Puffern (27_{I}, 27_{Q}) und dem Ausgangsanschluss (29) ein Schalter (28) angeordnet ist, um die Inphase- oder die Quadratur-Komponente nacheinander auszugeben, und dass der erste Demodulator (26) so ausgelegt ist, dass er die Helligkeits-komponenten zweier räumlich angrenzender Videobildzeilen gleichzeitig und in Quadratur von dem ersten Träger demoduliert.

10. Triax-Empfängerschnittstelle nach Anspruch 9, wobei die Daten aus den Puffern (27_{I}, 27_{Q}) mit der doppelten Rate gelesen werden, mit der die Daten in die Puffer (27_{I}, 27_{Q}) geschrieben werden.

11. Triax-Empfängerschnittstelle nach einem der Ansprüche 9 bis 10, mit Schaltungen (23, 24, 25) zum Erfassen von Phasensynchronisationssignalen für die I- und für die Q-Komponente des modulierten ersten Trägers in einem bei dem Triax-Eingangsanschluss (19) empfangenen Signal.

12. Triax-Empfängerschnittstelle nach einem der Ansprüche 9 bis 11, wobei zwischen den Triax-Eingangsanschluss (19) und den ersten Demodulator (26) ein Verstärker (21) mit einer frequenzabhängigen Verstärkung geschaltet ist.

13. Triax-Empfängerschnittstelle nach den Ansprüchen 11 und 12, bei der ein Verstärkungskorrekturfaktor des Verstärkers (21) so gesteuert wird, dass das Übersprechen zwischen einer Hochfrequenzkomponente eines Synchronisationssignals der I- oder der Q-Komponente und der anderen der I- und der Q-Komponente, die durch den ersten Demodulator (26) erhalten werden, minimiert wird.

14. Triax-Übertragungssystem, das eine Senderschnittstelle (3) nach einem der Ansprüche 1 bis 8 und eine Empfängerschnittstelle (18) nach einem der Ansprüche 9 bis 13 umfasst, die durch ein Triax-Kabel (11) verbunden sind.

15. Übertragungssystem nach Anspruch 14, das ferner mindestens ein Allpassfilter (22) umfasst, das auf die Farbwertkomponente eine frequenzabhängige Phasenverschiebung anwendet.

## Revendications

1. Interface (3) d'émetteur triaxiale destinée à émettre un signal vidéo sur un câble triaxial (11), comportant un accès d'entrée de signal vidéo (2), un premier modulateur (4) pour moduler une composante de luminance ([Y]) d'un signal vidéo reçu au niveau dudit accès d'entrée (2) sur une première porteuse et un deuxième modulateur (5) pour moduler une composante de chrominance ([B-Y], [R-Y]) du signal vidéo sur une deuxième porteuse, dans laquelle les bandes de luminance et de chrominance des composantes modulées sont centrées sur des fréquences différentes, et un accès de sortie triaxial (10) destiné à générer en sortie lesdites porteuses modulées vers le câble triaxial (11), **caractérisée en ce que** ledit premier modulateur (4) est un modulateur à quadrature (4), **en ce que** deux mémoires tampons (6_{I}, 6_{Q}) sont placées entre l'accès d'entrée (2) et le premier modulateur (4) pour mettre en mémoire tampon respectivement et alternativement la composante de luminance [Y] de lignes spatialement adjacentes d'une même image vidéo, dans laquelle un commutateur (12) pour l'alternance est placé entre l'accès d'entrée (2) et les mémoires tampons (6_{I}, 6_{Q}), **en ce qu'**un accès de sortie de l'une des mémoires tampons (6_{I}) est connecté à une entrée en phase et un accès de sortie de l'autre des mémoires tampons (6_{Q}) est connecté à l'entrée en quadrature du premier modulateur (4) et **en ce que** le premier modulateur (4) est conçu pour moduler les composantes de luminance mises en mémoire tampon desdites lignes d'image vidéo spatialement adjacentes simultanément et en quadrature sur ladite première porteuse.

2. Interface d'émetteur triaxiale selon la revendication 1, dans laquelle les données sont lues dans les mémoires tampons (6_{I}, 6_{Q}) à une vitesse égale à la moitié de celle à laquelle elles sont écrites dans lesdites mémoires tampons (6_{I}, 6_{Q}).

3. Interface d'émetteur triaxiale selon la revendication 1 ou 2, comportant un moyen d'émission de signaux de synchronisation de phase pour le composantes en phase I et en quadrature Q de ladite première porteuse modulée.

4. Interface d'émetteur triaxiale selon la revendication 3, dans laquelle ledit moyen d'émission de signaux de synchronisation de phase est conçu pour émettre des signaux de synchronisation de la composante I et de la composante Q dans une période de suppression de faisceau verticale du signal vidéo.

5. Interface d'émetteur triaxiale selon la revendication 3 ou 4, dans laquelle ledit signal de synchronisation est une ligne blanche.

6. Interface d'émetteur triaxiale selon l'une des revendications 3 à 5, dans laquelle ledit signal de synchronisation a une composante à haute fréquence.

7. Interface d'émetteur triaxiale selon la revendication 6, comportant un diviseur de fréquences (8) pour déduire la composante à haute fréquence à partir de la première porteuse.

8. Interface d'émetteur triaxiale selon une des revendications précédentes, dans laquelle le moyen de traitement de signal (9) est connecté entre ledit accès d'entrée (12) du signal vidéo et ledit deuxième modulateur (5), lequel moyen de traitement est conçu pour recevoir, dans une unité de temps donnée, deux lignes de la composante de chrominance ([B-Y], [R-Y]) et d'en déduire une ligne unique à fournir au deuxième modulateur (5).

9. Interface de récepteur triaxiale (18) destinée à fonctionner avec l'interface d'émetteur (3) conforme à une des revendications précédentes, comportant un accès d'entrée triaxial (19) destiné à connecter à un câble triaxial (11), un premier démodulateur (26) destiné à démoduler une composante de luminance d'un signal vidéo à partir d'une première porteuse reçue au niveau dudit accès d'entrée (19) et un deuxième démodulateur (30) destiné à démoduler une composante de chrominance du signal vidéo à partir d'une deuxième porteuse reçue au niveau dudit accès d'entrée (19), dans laquelle les bandes de luminance et de chrominance dudit signal vidéo sont centrées sur des fréquences différentes, **caractérisée en ce que** ledit premier démodulateur (26) est un démodulateur à quadrature, **en ce que** deux mémoires tampons (27_{I}, 27_{Q}) sont respectivement placées entre les sorties en phase I et en quadrature Q du premier démodulateur (26) et un accès de sortie (29) afin de mettre en mémoire tampon les composante en phase I et en quadrature Q de la composante de luminance démodulée, **en ce qu'**un commutateur (28) est placé entre les mémoires tampons (27_{I}, 27_{Q}) et l'accès de sortie (29) pour générer en sortie les composantes en phase ou en quadrature l'une après l'autre et **en ce que** le premier démodulateur (26) est conçu pour démoduler simultanément les composantes de luminance de deux lignes spatialement adjacentes d'une image vidéo et en quadrature à partir de ladite première porteuse.

10. Interface de récepteur triaxiale selon la revendication 9, dans laquelle les données sont lues dans les mémoires tampons (27_{I}, 27_{Q}) à une vitesse égale au double de celle à laquelle elles sont écrites dans les mémoires tampons (27_{I}, 27_{Q}).

11. Interface de récepteur triaxiale selon une des revendications 9 et 10, comportant des circuits (23, 24, 25) destinés à détecter des signaux de synchronisation de phase pour les composantes I et Q de ladite première porteuse modulée dans un signal reçu au niveau dudit accès d'entrée triaxial (19).

12. Interface de récepteur triaxiale selon une des revendications 9 à 11, dans laquelle un amplificateur (21) ayant un gain dépendant de la fréquence est connecté entre ledit accès d'entrée triaxial (19) et ledit premier démodulateur (26).

13. Interface de récepteur triaxiale selon les revendications 11 et 12, dans laquelle un facteur de correction de gain dudit amplificateur (21) est commandé de façon à minimiser la diaphonie entre une composante à haute fréquence d'un signal de synchronisation de l'une desdites composantes I et Q et l'autre desdites composantes I et Q obtenue par le premier démodulateur (26).

14. Système de transmission triaxial comportant une interface d'émetteur (3) conforme à une des revendications 1 à 8 et une interface de récepteur (18) conforme à une des revendications 9 à 13, connectées par un câble triaxial (11).

15. Système de transmission selon la revendication 14 comportant en outre au mois un filtre passe-tout (22) qui applique un déphasage dépendant de la fréquence à la composante de luminance.
